Europäisches Patentamt

(19) European Patent Office

Office européen des brevets

(11) Numéro de publication: **0 283 455**
**A1**

(12) **DEMANDE DE BREVET EUROPEEN**

(21) Numéro de dépôt: 88870020.0

(22) Date de dépôt: **19.02.88**

(51) Int. Cl.⁴: **G 02 B 23/24**

(30) Priorité: **24.02.87 BE 8700169**

(43) Date de publication de la demande:
**21.09.88 Bulletin 88/38**

(84) Etats contractants désignés:
**CH DE ES FR GB IT LI SE**

(71) Demandeur: **Challe, André**
**22 Avenue de Janvier b5**
**B-1200 Bruxelles (BE)**

(72) Inventeur: **Challe, André**
**22 Avenue de Janvier b5**
**B-1200 Bruxelles (BE)**

(54) **Appareil optique pour l'examen de l'âme des canons d'armes sans démonter les armes.**

(57) L'appareil optique est un istrument pour l'examen de l'intérieur des canons d'armes de tir ou autres sans être obligé de démonter ces armes.
Il est constitué de deux éléments:Un tuyau ou canal (D) ou tube prismatique d'une certaine longueur et d'un petit miroir (M) fixé a l'extrémité du tube,sous un angle de 45°,par rapport a l'axe longitudinal du tube.La partie réfléchissante du miroir faisant face a l'extrémité du tube.
Tout ce que le miroir captera sera réfléchi vers l'intérieur du tube et sera visible par l'autre extrémité.Le miroir peut être soutenu latéralement par le prolongement des parties latérales des flasques du canal.

FIG: 1

FIG: 3

FIG: 2

Bundesdruckerei Berlin

## Description

## APPAREIL OPTIQUE POUR L'EXAMEN DE L'AME DES CANONS D'ARMES, SANS DEMONTER LES ARMES.

L'invention s'applique aux domaines d'utilisation des armes de tir,chasse,militaires, police,gendarmerie,et tous domaines y attenants.

Pour examiner l'âme d'un canon d'une arme,on procédait généralement en démontant le canon,et on exposait une de ses extrémités a la lumiere,on regardait dans le canon par l'autre extrémité.

Pour un examen sommaire,on ne démontait pas le canon mais on l'éclairait a une de ses extrémités,par une source lumineuse,et on examinait par l'autre extrémité,si on y parvenait725Dans les armes a verrou,par exemple,les fusils militaires,non automatiques,les pistolets automatiques et les armes militaires ou autres automatiques,il n'est pas possible de procéder a un examen des canons, sans démonter ces armes,ou retirer le verrou des armes a verrou.

Avec l'appareil optique ces inconvénients disparaissent;sans rien démonter,il suffit d'introduire l'extrémité de l'appareil,munie de son miroir,contre la chambre,le verrou ou la glissiere de l'arme tirés vers l'arriere,pour dégager l'ouverture de l'éjection des douilles,et le miroir donnera une vue complète de l'intérieur du canon,dont l'autre extrémité sera exposée a une source lumuneuse;les rayons captés par le miroir étant dirigés par ce dernier,vers l'extrémité ouverte du canal,par ou l'examinateur regarde.

Les dessins joints montrent:

Page 4: Figure I:plans de la réalisation de l'appareil.

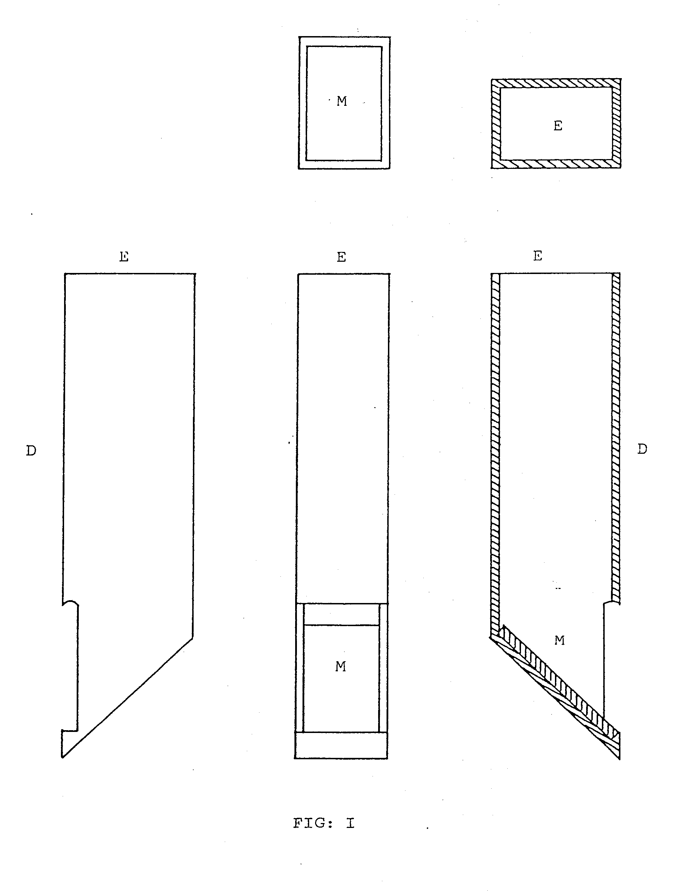

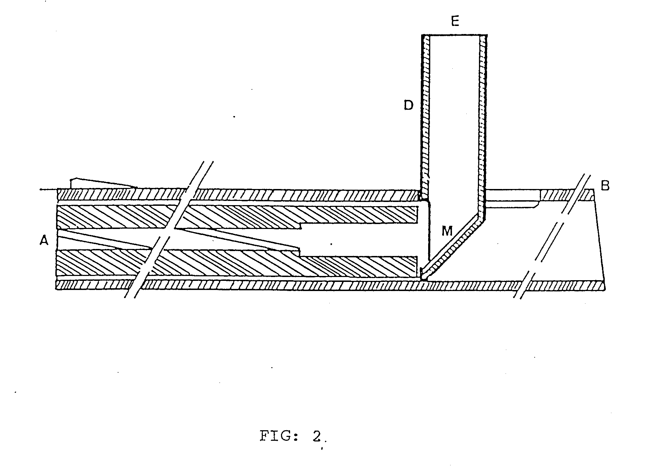

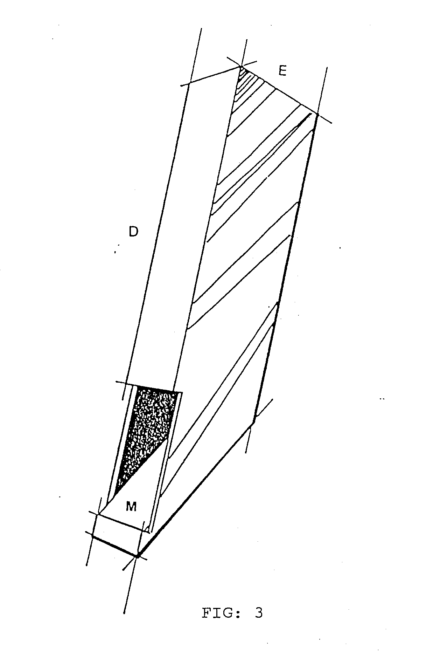

Page 5:Figure 2:Vue en coupe d'un canon,une boite de culasse ,et la présentation de l'appareil devant la chambre.

Page 6: Figure 3:Aspect de l'appareil construit. La réalisation de l'appareil est tres simple: le tube proprement ditest réalisé en plyester par injection et présente la forme qui figure sur le plan page 6 figure 3.

L'extrémité du tube munie du miroir est obtenue lors de la fabrication,et présente un plan incliné de 45° par rapport a l'axe longitudinal du tube,ou canal.

Sur le plan incliné est fixé un miroir,la partie réfléchissante dirigée vers l'autre extrémité du tube,pour projeter les rayons captés dans le tube rectangulaire.

Les mesures de l'appareil sont les suivantes:

Long:65mm

Largeur: 14mm

Epaisseur:11mm

Ces mesures peuvent être changées suivant nécessité.

remplir cette fonction,et qui soit de quelque matiere qui soit.

2-Le réflecteur peut être plat,concave ou convexe.

La surface réfléchissante peut être placée sous un angle compris entre 0 et 180°,par rapport a l'axe longitudinal du canal ou tube utilisé,les rayons réfléchis par la surface réfléchissante devant être dirigés vers l'intérieur du tuyau ou tube utilisé.

3-Le miroir peut être remplacé par un prisme.

4-L'appareil, est susceptible d'utiliser des reflecteurs de couleur.

L'angle idéal pour l'utilisation du miroir est de 45° par rapport a l'axe longitudinal du canal.

## Revendications

1-L'appareil optique,pour l'examen de l'interieur des canons des armes,utilise la réflexion d'un miroir,ou de tout autre matériel capable de

0283455

FIG: I

0283455

FIG: 2

0283455

FIG: 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-B-1 112 653  (LYTAX)<br>* Colonnes 1,3,4; figures 4,6 * | 1,2 | G 02 B   23/24 |
| A |  | 4 | |
| X | US-A-3 724 922  (I.D. JONES)<br>* Revendications; figures *<br>--- | 1 | |
| A | DE-B-1 206 172  (SIEMENS)<br>* Colonne 2; figures *<br>--- | 1,3 | |
| A | US-A-3 423 154  (J.P. WEBER)<br>* Revendications * | 1 | |

DOMAINES TECHNIQUES
RECHERCHES (Int. Cl.4)

G 02 B   23
G 02 B   17
G 02 B    7

Le présent rapport a été établi pour toutes les revendications

| Lieu de la recherche | Date d'achèvement de la recherche | Examinateur |
|---|---|---|
| LA HAYE | 07-06-1988 | PFAHLER R. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)